# EUROPEAN PATENT APPLICATION

(11) **EP 4 817 770 A1**
(43) Date of publication of application: **07.10.2026**
(21) Application number: 25167372.9
(22) Date of filing: 31.03.2025
(51) Int. Cl.: B23C 5/06, B23C 5/22

(54) **INDEXABLE CUTTING INSERT AND CUTTING TOOL**

(71) Applicant: AB Sandvik Coromant, 811 81 Sandviken (SE)
(72) Inventor: Carlberg, Håkan, 811 81 SANDVIKEN (SE); Viklund, Per, 811 81 SANDVIKEN (SE); Bergman, Stefan, 811 81 SANDVIKEN (SE)
(74) Representative: Sandvik

(57) **Abstract**

An indexable cutting insert comprising:
- a rake face (2) and an opposite abutment face (3);
- a peripheral surface (10) extending between said faces (2, 3) and comprising a conical side abutment surface (11);
- several anti-rotation pockets (20) with U-shaped cross-section provided in the peripheral surface.

Each anti-rotation pocket (20) has two opposite lateral walls and a central wall (23) located therebetween and extending in an essentially straight line in any plane that is perpendicular to the centre axis of the cutting insert. Each anti-rotation pocket also has an upper transition surface (25), through which the central wall (23) of the anti-rotation pocket adjoins to a conically shaped abutment surface (11) included in the peripheral surface (10) of the cutting insert. The invention relates to the inclination and curvature of different parts (26, 27) of said central wall (23).

## Description

### FIELD OF THE INVENTION AND PRIOR ART

The present invention relates to an indexable cutting insert according to the preamble of claim 1. The invention also relates to a cutting tool comprising such an indexable cutting insert.

A cutting tool, for instance in the form of a milling tool or turning tool, may be provided with one or more indexable cutting inserts detachably mounted in a respective insert seat in a tool body of the cutting tool. Each individual cutting insert may be provided with a circular cutting edge, as illustrated for instance in EP 3 643 439 A1 and US 11 638 961 B2, wherein the cutting insert has a rake face and an abutment face arranged on opposite sides of the cutting insert and a peripheral surface that extends around the cutting insert between the rake face and the abutment face, and wherein the circular cutting edge is formed at an intersection between the rake face and the peripheral surface. A cutting insert of this type with a circular cutting edge is normally configured to abut against a tangentially facing bottom wall in an insert seat trough the abutment face and against one or more curved side support surfaces on an internal wall of the insert seat through a conically shaped abutment surface included in the peripheral surface of the cutting insert.

Different working positions, or indexing positions, of a cutting insert of the above-mentioned type with a circular cutting edge may be defined by several anti-rotation pockets included in the peripheral surface of the cutting insert and distributed about the centre axis of the cutting insert, as illustrated in EP 3 643 439 A1 and US 11 638 961 B2. In each working position of the cutting insert, at least one of said anti-rotation pockets is positioned in front of a protrusion on the internal wall of the insert seat with at least a part of the protrusion received in the anti-rotation pocket in question. By its co-operation with the anti-rotation pockets on the cutting insert, said protrusion on the internal wall of the insert seat assists in defining the different working positions of the cutting insert in the insert seat and also prevents the cutting insert from rotating in the insert seat out of its prevailing working position when the cutting insert is subjected to high cutting forces during machining that tend to rotate the cutting insert in the insert seat. This type of rotation-preventing solution with anti-rotation pockets included in the peripheral surface of the cutting insert and distributed about the centre axis of the cutting insert may also be used on an indexable cutting insert having a conically shaped abutment surface included in the peripheral surface of the cutting insert and a polygonal cutting edge formed at an intersection between the peripheral surface and the rake face of the cutting insert, as disclosed for instance in WO 2024/162393 A1.

### OBJECT OF THE INVENTION

The object of the present invention is to provide an indexable cutting insert of the above-mentioned type that has a new and favourable design.

### SUMMARY OF THE INVENTION

According to the invention, said object is achieved by means of an indexable cutting insert having the features defined in claim 1.

The indexable cutting insert according to the invention is turnable into different working positions and comprises:
- a rake face and an abutment face arranged on opposite sides of the cutting insert, the cutting insert having a centre axis that extends between the rake face and the abutment face, wherein the abutment face comprises an abutment surface that is configured to serve as a tangential abutment surface of the cutting insert in said working positions of the cutting insert and abut against a corresponding tangential support surface in an insert seat in a tool body of a cutting tool when the cutting insert is mounted in the insert seat in any of its working positions;
- a peripheral surface extending around the cutting insert between the rake face and the abutment face;
- a cutting edge formed at an intersection between the peripheral surface and the rake face and extending around the centre axis along a periphery of the rake face;
- a conically shaped first surface included in the peripheral surface and fully encircling a portion of the centre axis, wherein this first surface is concentric with the centre axis and lies on the lateral surface of a first imaginary cone that points in a reference direction defined as a direction from the rake face towards the abutment face along the centre axis, and wherein the cutting insert, when mounted in said insert seat in any of its working positions, is configured to abut against one or more side support surfaces in the insert seat through this first surface; and
- several anti-rotation pockets provided in the peripheral surface and distributed about the centre axis, wherein each one of the anti-rotation pockets opens into the abutment face at a first end of the anti-rotation pocket and adjoins to said first surface at an opposite second end of the anti-rotation pocket, wherein each one of the anti-rotation pockets has a U-shaped cross-section in planes perpendicular to the centre axis, and wherein each one of the anti-rotation pockets has such a shape that all surface points of the anti-rotation pocket are visible when viewing the abutment face in a plan view along the centre axis and have a respective unique projection point in a first imaginary plane that is perpendicular to the centre axis and contains said abutment surface.

Each one of the anti-rotation pockets has:
- a first lateral wall extending from the first end of the anti-rotation pocket towards the second end thereof, wherein a first rotation-preventing surface is provided on the first lateral wall;
- a second lateral wall extending from the first end of the anti-rotation pocket towards the second end thereof, wherein the first and second lateral walls are located opposite each other and face each other, and wherein a second rotation-preventing surface is provided on the second lateral wall opposite to said first rotation-preventing surface;
- a central wall extending from the first end of the anti-rotation pocket towards the second end thereof, wherein the central wall has a first longitudinal edge, through which it adjoins to the first lateral wall, and an opposite second longitudinal edge, through which it adjoins to the second lateral wall, and wherein the central wall extends in a straight line, or at least substantially straight line, between its first and second longitudinal edges as seen in any plane that is perpendicular to the centre axis and intersects the first and second longitudinal edges of the central wall; and
- an upper transition surface at the second end of the anti-rotation pocket, wherein the central wall adjoins to said first surface through the upper transition surface, wherein the upper transition surface is convex in any plane that contains the centre axis and intersects the upper transition surface and has a radius of curvature.

The central wall of each anti-rotation pocket is divided at an imaginary dividing plane into an upper portion located between the imaginary dividing plane and the upper transition surface of the anti-rotation pocket and an adjacent lower portion located between the imaginary dividing plane and the abutment face, wherein the imaginary dividing plane is perpendicular to the centre axis and located at a distance of 0.85h from the first imaginary plane, where h is the distance from the first imaginary plane to the point on the upper transition surface located at the longest distance from the first imaginary plane, wherein the lower portion of the central wall has an upper surface, through which it adjoins to said upper portion of the central wall and which is concave as seen in any plane that contains the centre axis and intersects the upper surface, this upper surface having a radius of curvature of at least 1.0 mm, preferably at least 1.5 mm.

Furthermore, the central wall of each anti-rotation pocket is configured such:
- that in each point on the upper portion of the central wall, and in each point on the central wall located in said imaginary dividing plane, the central wall has a tangent plane that forms an angle β of at least 25° and no more than 60°, preferably at least 30° and no more than 50°, with the first imaginary plane, and
- that in each point on the lower portion of the central wall, the central wall has a tangent plane that forms an angle γ with the first imaginary plane smaller than 90° and larger than or equal to the angle β formed between the first imaginary plane and the tangent plane of the points on the central wall located in said imaginary dividing plane.

When mounted in an insert seat in a tool body of a cutting tool in any of its working positions, the indexable cutting insert is intended to be positioned with one of its anti-rotation pockets in front of and facing a protrusion on an internal wall of the insert seat with at least a part of the protrusion received in the anti-rotation pocket in question, wherein the protrusion is configured to come into stopping contact with one of said first and second rotation-preventing surfaces of this anti-rotation pocket when the cutting insert is subjected to a rotation in the insert seat in any direction about its centre axis such that the cutting insert is prevented from rotating in the insert seat out of its prevailing working position by this stopping contact.

Cutting inserts for use in a milling or turning tool are normally produced from carbide powder by pressing and sintering. Uneven compaction of carbide powder during the pressing of the cutting insert, and a resulting non-uniform powder compaction in the green body formed in the press die, can lead to deviations from the desired shape of the cutting insert and the formation of small surface cracks which can extend into the cutting insert during subsequent sintering of the green body. The small surface cracks may lead to chipping and breakouts in the cutting insert in the vicinity of the anti-rotation pockets and/or the abutment face when the cutting insert is used for machining of a workpiece.

The design of the anti-rotation pockets, as specified above, results in a more uniform compaction of carbide powder in the cutting insert during the pressing of the cutting insert. During a subsequent sintering of the cutting insert, this more uniform compaction of the carbide powder in the cutting insert will result in prevented crack formation, an improved surface finish and a higher precision with respect to the shape and tolerances of the cutting insert. Thus, the above-specified design of the anti-rotation pockets will make the cutting insert more suitable for powder pressing and will also facilitate the release of the green body from the press die after pressing and decrease the risk for or further prevent crack formation in the vicinity of the anti-rotation pockets.

The upper transition surface of each anti-rotation pocket forms a convex transition from the conically shaped first surface to the upper portion of the central wall of the anti-rotation pocket located directly below the upper transition surface. The upper portion of the central wall may consist of a planar surface, a convex surface or a concave surface. However, the upper portion of the central wall may as an alternative consist of different combinations of surface sections, where each individual surface section is planar, convex or concave. In any case, in each point on the upper portion of the central wall, the central wall has a tangent plane that forms an angle β of 25-60°, preferably 30-50°, with the first imaginary plane, i.e. with the plane that is perpendicular to the centre axis of the cutting insert and contains the abutment surface on the abutment face of the cutting insert. It has been observed that there will be a more non-uniform compaction of the carbide powder along each anti-rotation pocket during the pressing of the cutting insert if said angle β is smaller than 25°, which may lead to deviations from the desired shape of the cutting insert and the formation of small surface cracks during subsequent sintering. When said angle β is 25° or larger, the problem with formation of small surface cracks during sintering of the green body is substantially reduced and the surface finish of the cutting insert is consequently improved. When said angle β is 30° or larger, also the problem with shape deviations during sintering of the green body is substantially reduced and the precision with respect to the shape and tolerances of the cutting insert is consequently improved. When said angle β is larger than 60°, the anti-rotation pocket has to be designed with an inappropriately long extension in the axial direction of the cutting insert in order to give the anti-rotation pocket a depth in the radial direction of the cutting insert that is sufficient with respect to the achievement of a proper rotation-stopping engagement with the rotation-preventing protrusion on the internal wall of the associated insert seat. It has been observed that an angle β smaller than 50° is particularly favourable in this respect.

As mentioned above, the lower portion of the central wall of each anti-rotation pocket has a concave upper surface closest to the upper portion of the central wall with a radius of curvature of at least 1.0 mm, preferably at least 1.5 mm. It has been observed that there will be a more non-uniform compaction of the carbide powder along each anti-rotation pocket during the pressing of the cutting insert if the radius of curvature of said concave upper surface is smaller than 1.0 mm, which may lead to deviations from the desired shape of the cutting insert and the formation of small surface cracks during subsequent sintering. When the radius of curvature is 1.0 mm or larger, the problem with formation of small surface cracks during sintering of the green body is substantially reduced and the surface finish of the cutting insert is consequently improved. When the radius of curvature is 1.5 mm or larger, also the problem with shape deviations during sintering of the green body is substantially reduced and the precision with respect to the shape and tolerances of the cutting insert is consequently improved. It has been observed that this arrangement of the lower portion of the central wall with a radius of curvature of at least 1.0 mm, preferably at least 1.5 mm, in combination with the above-mentioned arrangement of the upper portion of the central wall with said angle β being at least 25° and no more than 60°, has an enhanced positive impact on a more uniform compaction of the carbide powder.

The part of the lower portion of the central wall of each anti-rotation pocket located below said concave upper surface may consist of a planar surface, a convex surface or a concave surface.

However, this part of the lower portion of the central wall may as an alternative consist of different combinations of surface sections, where each individual surface section is planar, convex or concave. In any case, in each point on the lower portion of the central wall, the central wall has a tangent plane that forms an angle γ with the above-mentioned first imaginary plane smaller than 90° and larger than or equal to the above-mentioned angle β formed between the first imaginary plane and the tangent plane of the points on the central wall located in the imaginary dividing plane. By having the angle γ smaller than 90°, the anti-rotation pockets are prevented from obstructing a uniaxial pressing of the cutting insert. It has been observed that this arrangement of the lower portion of the central wall, in combination with the above-mentioned arrangement of the upper portion of the central wall with said angle β being at least 25° and no more than 60° and the above-mentioned arrangement of the lower portion of the central wall with a radius of curvature of at least 1.0 mm, preferably at least 1.5 mm, has a further enhanced positive impact on a more uniform compaction of the carbide powder.

In this description and the subsequent claims, in consistency with the general definition of a tangent plane, a tangent plane at a point on a flat surface is considered to be the plane that coincides with the surface itself.

When the cutting insert is used in a cutting tool in the form of a rotary cutting tool, such as a milling tool, the expression "tangential support surface in an insert seat" refers to a support surface with a surface normal extending in a direction that is substantially tangential to the rotating tool body. In contrast, when the cutting insert is used in a cutting tool in the form of a turning tool, the expression "tangential support surface in an insert seat" refers to a support surface with a surface normal extending in a direction that is substantially tangential to a rotating workpiece that is being machined by the cutting tool. The tangential support surface in the insert seat may be arranged in a completely tangential position in the tool body. However, the tangential support surface in the insert seat may as an alternative be slightly inclined, for instance in correspondence with an axial tipping-in angle of the cutting insert in an interval from -20° to 30° and/or a radial tipping-in angle of the cutting insert in an interval from -20° to 10°.

According to an embodiment of the invention, said radius of curvature of the upper transition surface of each anti-rotation pocket is smaller than the radius of curvature of said concave upper surface. The radius of curvature of the upper transition surface is preferably smaller than 1.0 mm, and more preferably smaller than 0.5 mm. The radius of curvature of the upper transition surface is not necessarily constant seen in different sections through the upper transitions surface between the first and second lateral walls, but it can vary. Thus, the radius of curvature of the upper transition surface may be slightly different in different planes that contain the centre axis and intersect the upper transition surface.

According to another embodiment of the invention, each one of the anti-rotation pockets is configured such that, in each plane that is perpendicular to the centre axis and intersects the lower portion of the central wall of the anti-rotation pocket, the following condition is fulfilled: 0.25≤b/B<1.00, preferably 0.25≤b/B≤0.90, more preferably 0.30≤b/B≤0.60, where:
- b is the distance between the first and second longitudinal edges of the central wall, as seen in the plane in question, and
- B is the width of the anti-rotation pocket, as seen in the plane in question.

When b/B is equal to or larger than 0.25, the lower portion of the central wall of the anti-rotation pocket has a width that enhances the positive effect of the above-mentioned arrangement of the lower portion of the central wall with said angle γ, the above-mentioned arrangement of the upper portion of the central wall with said angle β being at least 25° and no more than 60° and the above-mentioned arrangement of the lower portion of the central wall with a radius of curvature of at least 1.0 mm, preferably at least 1.5 mm. This is more pronounced when b/B is equal to or smaller than 0.90, and most pronounced when 0.30≤b/B≤0.60.

According to another embodiment of the invention, each one of the anti-rotation pockets extends to a height of at least 0.5H as measured from said first imaginary plane, where H is the distance from the first imaginary plane to a reference plane that is perpendicular to the centre axis and contains the points on the rake face located at the longest distance from the first imaginary plane. Preferably, each one of the anti-rotation pockets extends to a height of not more than 0.8H. It has been observed that a height of at least 0.5H implies an enhanced positive effect on a more uniform compaction of the carbide powder. If the anti-rotation pockets extend to a height of more than 0.8H, the cutting edge may suffer from a reduced strength if a predominant wear is notch wear and if notch wear occurs straight above one of the anti-rotation pockets.

The above-mentioned first and second rotation-preventing surfaces in each anti-rotation pocket are preferably planar, or at least substantially planar. In this case, the first and second rotation-preventing surfaces of the same anti-rotation pocket preferably form an angle of 35-65°, preferably 40-60°, with each other as seen in any plane that is perpendicular to the centre axis and intersects the first and second rotation-preventing surfaces, wherein the first and second rotation-preventing surfaces of the same anti-rotation pocket diverge as seen in a direction from the centre axis and radially outwards. When said angle is 35° or larger, the problem with formation of small surface cracks during sintering of the green body is substantially reduced and the surface finish of the cutting insert is consequently improved. When said angle is 40° or larger, also the problem with shape deviations during sintering of the green body is substantially reduced and the precision with respect to the shape and tolerances of the cutting insert is consequently improved. When said angle is 65° or smaller, an improved rotation-preventing function is obtained. This is especially observed when said angle is 60° or smaller.

The anti-rotation pockets are preferably equally distributed about the centre axis. This also has a positive impact on a more uniform compaction of the carbide powder.

According to another embodiment of the invention, the cutting insert has 360°/n rotational symmetry about the centre axis, wherein n is an integer corresponding to the number of said anti-rotation pockets included in the peripheral surface of the cutting insert. The number of anti-rotation pockets in the peripheral surface of the cutting insert is preferably 4, 5, 6, 7 or 8. In this context, the cutting insert is considered to have 360°/n rotational symmetry about the centre axis even if any of the rake face, the abutment face or the peripheral surface is provided with one or more minor markings, for instance in the form of minor indentations, that lack 360°/n rotational symmetry image about the centre axis, on condition that these one or more markings have no relevance for the functioning of the cutting insert. If the number of anti-rotation pockets in the peripheral surface of the cutting insert is 9 or more, the positive impact from the above-mentioned arrangement of the anti-rotation pockets decreases.

Each one of the anti-rotation pockets preferably has mirror symmetry with respect to a symmetry plane that contains the centre axis and extends across the anti-rotation pocket halfway between the first and second lateral walls of the anti-rotation pocket. This mirror symmetry has a positive impact on a more uniform compaction of the carbide powder.

The cutting edge is preferably circular, as seen when viewing cutting edge in a plan view along the centre axis of the cutting insert, and formed at an intersection between the rake face and the peripheral surface, preferably between the rake face and said conically shaped first surface. However, the cutting edge may as an alternative be polygonal, as seen when viewing the cutting edge in a plan view along the centre axis of the cutting insert. In the latter case, the cutting edge is formed at an intersection between the rake face and an upper part of the peripheral surface located between the conically shaped first surface and the rake face, for instance in the manner disclosed in WO 2024/162393 A1.

Another embodiment of the invention is characterized in:
- that the indexable cutting insert comprises several second surfaces included in the peripheral surface and several connecting surfaces included in the peripheral surface, wherein each one of the second surfaces is located between said first surface and the abutment face and connected to the first surface via a dedicated one of the connecting surfaces, wherein the second surfaces are distributed about the centre axis and separated from each other by the anti-rotation pockets such that each one of the second surfaces adjoins to one of the anti-rotation pockets along a first lateral edge of the second surface and to another adjacent anti-rotation pocket along an opposite second lateral edge of the second surface, and wherein each one of the second surfaces is in its entirety located inside said first imaginary cone and spaced from the lateral surface thereof;
- that each one of the connecting surfaces has an upper edge, through which it adjoins to said first surface and which lies on the lateral surface of said first imaginary cone, and a lower edge, through which it adjoins to the associated second surface, the lower edge of the connecting surface and all surface points on the connecting surface between the lower and upper edges thereof being located inside said first imaginary cone and spaced from the lateral surface thereof;
- that each one of the second surfaces is conically shaped, wherein the second surfaces together lie on the lateral surface of a second imaginary cone that is concentric with the centre axis and points in said reference direction, or each one the second surfaces is planar, wherein the second surfaces lie on a respective lateral face of an imaginary pyramid that is centred on the centre axis and points in said reference direction;
- that said first surface is in its entirety located inside said second imaginary cone and spaced from the lateral surface thereof or in its entirety located inside said imaginary pyramid and spaced from the lateral faces thereof;
- that each one of the connecting surfaces has its lower edge lying on the lateral surface of said second imaginary cone or on a lateral face of said imaginary pyramid, the upper edge of the connecting surface and all surface points on the connecting surface between the lower and upper edges thereof being located inside said second imaginary cone and spaced from the lateral surface thereof or being located inside said imaginary pyramid and spaced from the lateral faces thereof; and
- that each one of the second surfaces has such a shape that the distance as measured along the second surface between the first and second lateral edges thereof in a cross-sectional plane that is perpendicular to the centre axis and intersects said first and second lateral edges is continuously reduced when moving along the second surface in said reference direction, i.e. in a direction towards the abutment face.

Thus, the width of each one of the second surfaces, as measured along the individual second surface between said first and second lateral edges thereof, has a maximum value at an upper end of the first and second lateral edges and a minimum value at a lower end of the first and second lateral edges, wherein this width is continuously reduced when moving downwards along the first and second lateral edges from the upper end thereof to the lower end thereof.

The above-specified design of the second surfaces implies that each one of the second surfaces has a larger clearance angle than the conically shaped first surface, which, in combination with the above-mentioned continuously reduced width of each one of the second surfaces towards the abutment face of the cutting insert, will give several advantages when it comes to the manufacturing of the cutting insert. By introducing said conically shaped or planar second surfaces with a larger clearance angle than the conically shaped first surface, instead of having a conically shaped side abutment surface that extends along the peripheral surface of the cutting insert all the way to the abutment face, the anti-rotation pockets can be made shallower at the lower part of the cutting insert closest to the abutment face, which results in a more uniform compaction of carbide powder in the lower part of the cutting insert during the pressing of the cutting insert. During a subsequent sintering of the cutting insert, this more uniform compaction of the carbide powder in the lower part of the cutting insert will result in prevented crack formation, an improved surface finish and a higher precision with respect to the shape and tolerances of the cutting insert. Thus, the above-mentioned continuously reduced width of each one of the second surfaces towards the abutment face of the cutting insert will make the cutting insert more suitable for powder pressing and will also facilitate the release of the green body from the press die after pressing and decrease the risk for or further prevent crack formation in the vicinity of the anti-rotation pockets.

The above-mentioned continuously reduced width of each one of the second surfaces towards the abutment face of the cutting insert also implies that the required space for the cutting insert in the associated insert seat is reduced.

Each one of the second surfaces preferably has mirror symmetry with respect to a symmetry plane that contains the centre axis and intersects the second surface halfway between its first lateral edge and its second lateral edge. This mirror symmetry has a positive impact on a more uniform compaction of the carbide powder.

According to another embodiment of the invention, said first and second surfaces are configured such that the following condition is fulfilled:
0°<(α2-α1)≤20°, preferably 2°≤(α2-α1)≤15°, more preferably 2°≤(α2-α1)≤10°, where:
   - α1 is the half-apex angle of said first imaginary cone, and
   - α2 is the half-apex angle of said second imaginary cone when each one of the second surfaces is conically shaped, and
α2 is the acute angle of inclination of each individual second surface in relation to the centre axis of the cutting insert when each one of the second surfaces is planar.

If (α2-α1) is larger than 20°, the cutting insert may suffer from a reduced stability. Best effects regarding a uniform compaction of the carbide powder are observed when 2°≤(α2-α1)≤15°, and especially when 2°≤(α2-α1)≤10°.

According to another embodiment of the invention, said second surfaces and said connecting surfaces are configured such that the following condition is fulfilled: 0.20≤H2/H≤0.65, preferably 0.30≤H2/H≤0.55, where:
- H is the distance from said first imaginary plane to a reference plane that is perpendicular to the centre axis and contains the points on the rake face located at the longest distance from the first imaginary plane, and
- H2 is the maximum distance from the first imaginary plane to the upper edge of any one of the connecting surfaces.

Thus, the distance H corresponds to the thickness of the cutting insert. It has been observed that a more uniform compaction of the carbide powder is achieved when H2/H is equal to or larger than 0.20 and especially when H2/H is equal to or larger than 0.30. When H2/H is equal to or smaller than 0.65, the anti-rotation pockets can be designed with a depth in the radial direction of the cutting insert that is sufficient with respect to the achievement of a proper rotation-stopping engagement with the rotation-preventing protrusion on the internal wall of the associated insert seat without giving them a long extension in the axial direction that is less beneficial. When H2/H is equal to or smaller than 0.55, an improved strength of the cutting insert is achieved in addition to a more uniform compaction of the carbide powder.

Further advantageous features of the indexable cutting insert according to the present invention will appear from the description following below.

The invention also relates to a cutting tool comprising at least one indexable cutting insert of the above-mentioned type.

Further advantageous features of the cutting tool according to the present invention will appear from the description following below.

A cutting tool according to the present invention is particularly intended to be designed as a milling tool. In this case, the tool body of the cutting tool preferably comprises two or more insert seats distributed in the circumferential direction of the tool body and accommodating a respective indexable cutting insert of the above-mentioned type. However, the cutting tool according to the present invention may as an alternative be designed as a turning tool.

### BRIEF DESCRIPTION OF THE DRAWINGS

With reference to the appended drawings, a specific description of embodiments of the invention cited as examples follows below. In the drawings:
- Fig 1a: is a perspective view of an indexable cutting insert according to a first embodiment of the present invention,
- Fig 1b: a plan view from above of the cutting insert of Fig 1a,
- Fig 1c and 1d: are lateral views in larger scale and from different directions of the cutting insert of Fig 1a,
- Fig 1e: is a lateral view corresponding to Fig 1d,
- Fig 1f: is a plan view from below of the cutting insert of Fig 1a,
- Fig 1g: is a cut according to the line Ig-Ig in Fig 1f,
- Fig 1h: is a detail enlargement of a part of the cut of Fig 1g,
- Fig 1i: is a lateral view corresponding to Fig 1d,
- Fig 1j: is a cut according to the line Ij-Ij in Fig 1i,
- Fig 1k: is a cut according to the line Ik-Ik in Fig 1i,
- Fig 1l: is a cut according to the line Il-Il in Fig 1i,
- Fig 1m: is a cut according to the line Im-Im in Fig 1i,
- Fig 2a: is a perspective view of an indexable cutting insert according to a second embodiment of the invention,
- Fig 2b and 2c: are lateral views from different directions of the cutting insert of Fig 2a,
- Fig 2d: is a plan view from below of the cutting insert of Fig 2a,
- Fig 2e: is a lateral view corresponding to Fig 2c,
- Fig 2f: is a cut according to the line IIf-IIf in Fig 2d,
- Fig 3a: is a perspective view of an indexable cutting insert according to a third embodiment of the invention,
- Fig 3b and 3c: are lateral views from different directions of the cutting insert of Fig 3a,
- Fig 3d: is a plan view from below of the cutting insert of Fig 3a,
- Fig 3e: is a cut according to the line IIIe-IIIe in Fig 3d,
- Fig 3f: is a lateral view corresponding to Fig 3c,
- Fig 4: is a perspective view of a cutting tool provided with indexable cutting inserts according to the embodiment illustrated in Figs 1a-1m, as seen with one of the cutting inserts removed from its insert seat in the tool body of the cutting tool,
- Fig 5: is a lateral view of the cutting tool of Fig 4,
- Fig 6: is a cut according to the line VI-VI in Fig 5,
- Fig 7: is a plan view of a part of the cutting tool of Fig 4, and
- Fig 8: is a cut according to the line VIII-VIII in Fig 7.

### DETAILED DESCRIPTION OF EMBODIMENTS OF THE INVENTION

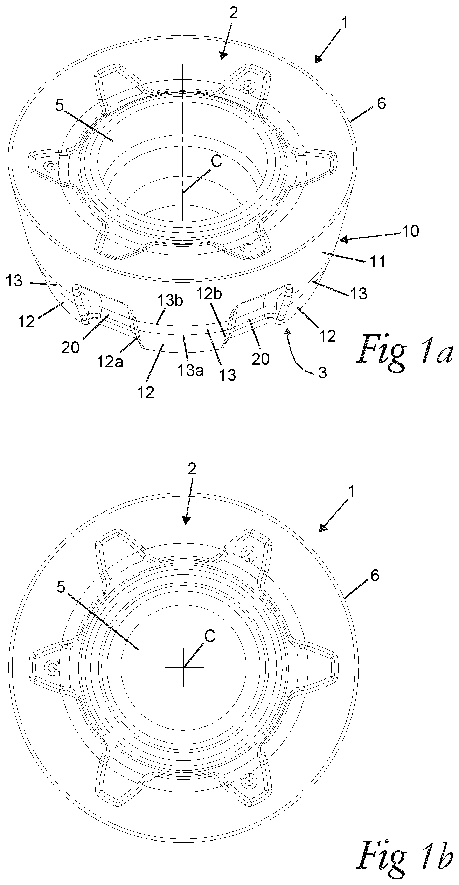

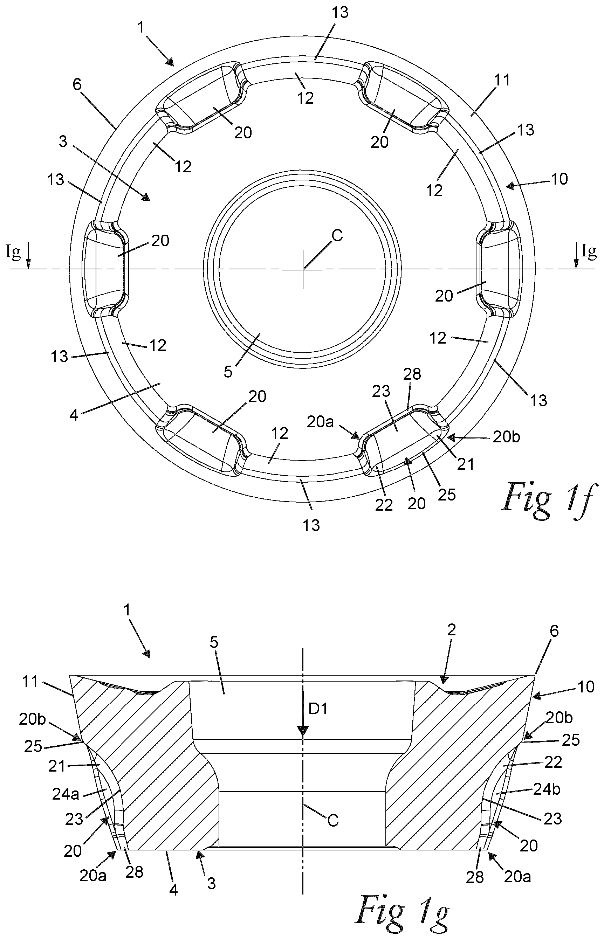

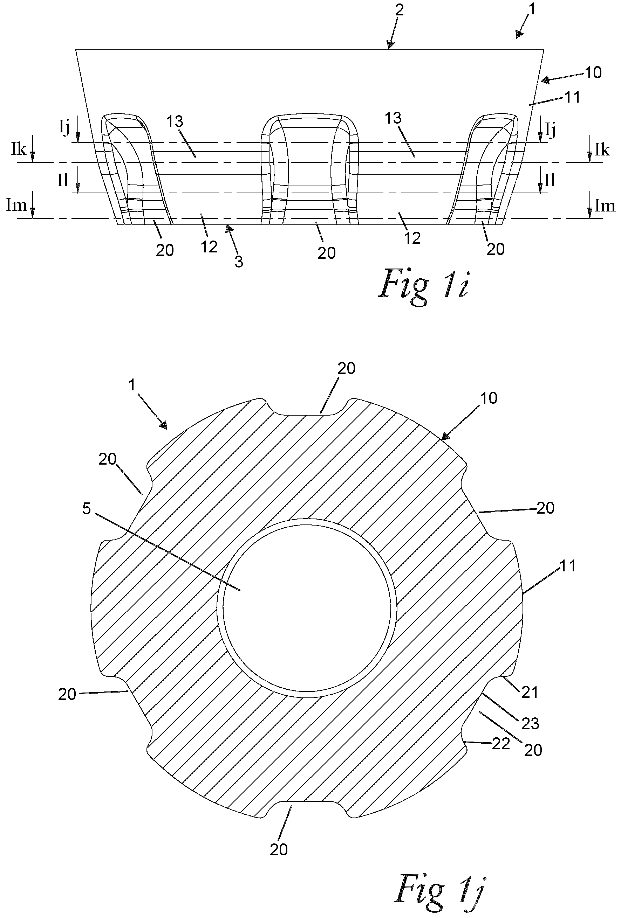

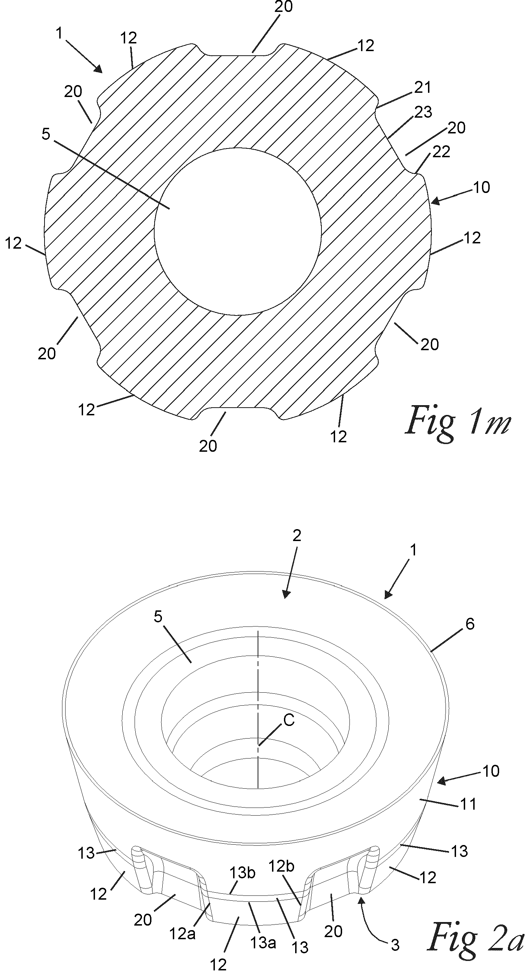

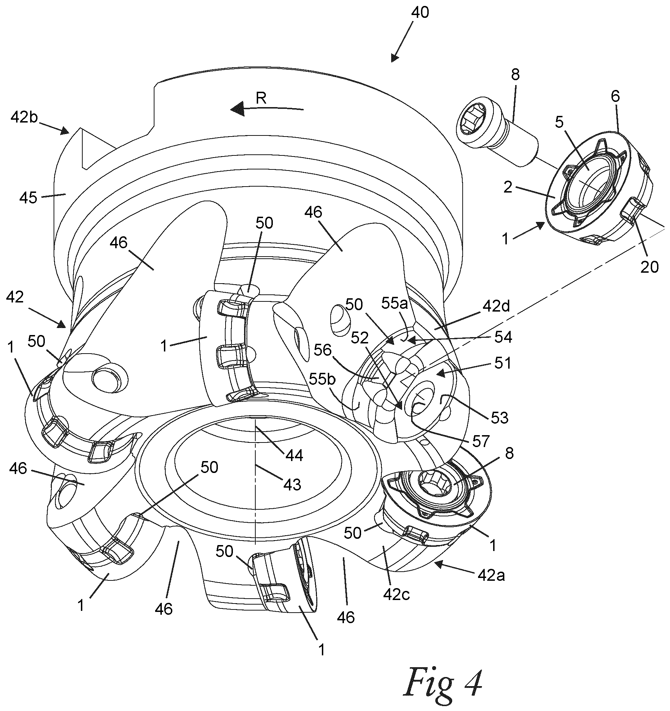

Three different embodiments of an indexable cutting insert 1 according to the present invention are illustrated in Figs 1a-1m, Figs 2a-2f and Figs 3a-3f. The cutting insert 1 is configured for use in a cutting tool 40 for milling or turning, for instance a milling tool of the type illustrated in Figs 4-8.

The cutting insert 1 comprises a rake face 2 and an abutment face 3 arranged opposite to each other on opposite sides of the cutting insert 1 and serving as top and bottom faces of the cutting insert. The rake face 2 and the abutment face 3 are configured to serve as a leading face and a trailing face, respectively, of the cutting insert 1 when the cutting insert is mounted to a tool body 42 (see Figs 4-8) of a rotary cutting tool and as seen in an intended direction of rotation R of the tool body. Thus, when mounted in an insert seat 50 in a tool body 42 of a rotary cutting tool, the cutting insert 1 is configured to be mounted in the insert seat 50 with the rake face 2 facing forward in the intended direction of rotation R of the tool body and with the abutment face 3 facing rearward as seen in the intended direction of rotation R of the tool body. The cutting insert 1 has a round basic shape and is rotatable into different working positions. Thus, the cutting insert 1 may be mounted in different rotary positions, i.e. different indexing position, in the associated insert seat 50.

The abutment face 3 comprises an abutment surface 4 that is configured to serve as a tangential abutment surface of the cutting insert 1 in the different working positions of the cutting insert. When mounted in an associated insert seat 50, the cutting insert 1 is configured to abut against a tangential support surface 53 on a bottom wall 52 in the insert seat via the abutment surface 4 on the abutment face 3. The cutting insert 1 has a centre axis C, which extends between the rake face 2 and the abutment face 3. The cutting insert 1 is provided with a through hole 5, which extends centrally through the cutting insert between the rake face 2 and the abutment face 3. The centre axis C of the cutting insert coincides with the centre axis of the through hole 5. The through hole 5 is configured to receive a fastening element 8 (see Figs 4-6) in the form of a screw, by means of which the cutting insert 1 may be releasably fixed in an insert seat 50 of a tool body 42. A peripheral surface 10, which constitutes the relief surface of the cutting insert 1, extends around the cutting insert between the rake face 2 and the abutment face 3.

A cutting edge 6 is formed at an intersection between the peripheral surface 10 and the rake face 2 and extends around the centre axis C along a periphery of the rake face 2. The cutting edge 6 is concentric with the centre axis C.

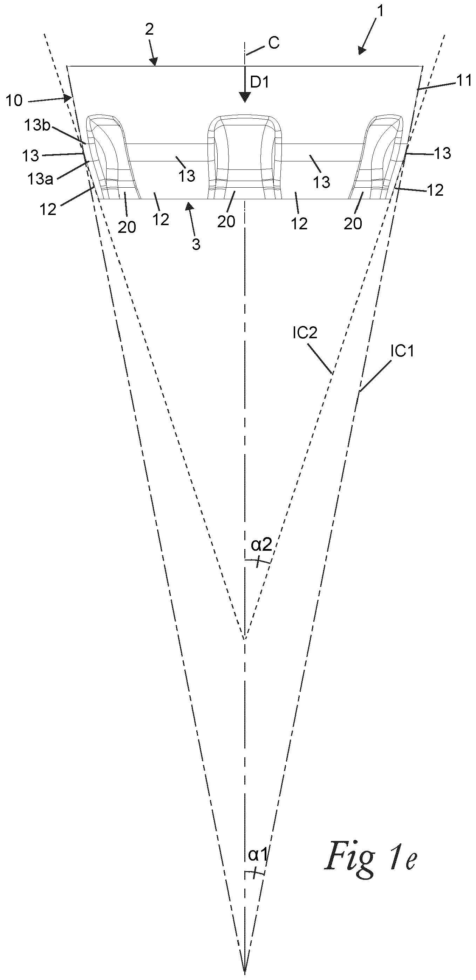

The cutting insert 1 comprises a conically shaped first surface 11, which is included in the peripheral surface 10 and fully encircles a portion of the centre axis C. This first surface 11 is concentric with the centre axis C and lies on the lateral surface of a first imaginary cone IC1 (see Figs 1e, 2e and 3f) that points in a reference direction D1 defined as a direction from the rake face 2 towards the abutment face 3 along the centre axis C. When mounted in the associated insert seat 50, the cutting insert 1 is configured to abut against one or more curved side support surfaces 55a, 55b in the insert seat 50 through one or more parts of this first surface 11. Thus, the conically shaped first surface 11 is configured to serve as a side abutment surface of the cutting insert 1 in the different working positions of the cutting insert.

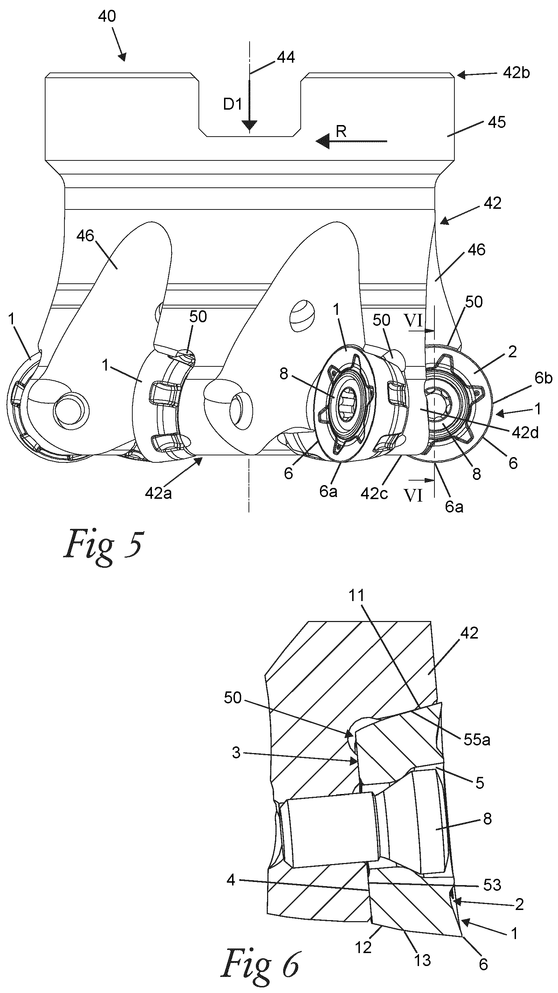

In the illustrated embodiments, the cutting edge 6 is circular and formed at an intersection between said conically shaped first surface 11 and the rake face 2. In each one of the different working positions of the cutting insert 1 in the associated insert seat 50, a part of the section of the circular cutting edge 6 located between the axially foremost point 6a (see Fig 5) on the cutting edge and the radially outermost point 6b on the cutting edge is configured to operate as a primary cutting edge of the cutting insert 1, and a small section at the axially foremost point 6a on the cutting edge 6 is configured to operate as a secondary cutting edge of the cutting insert 1.

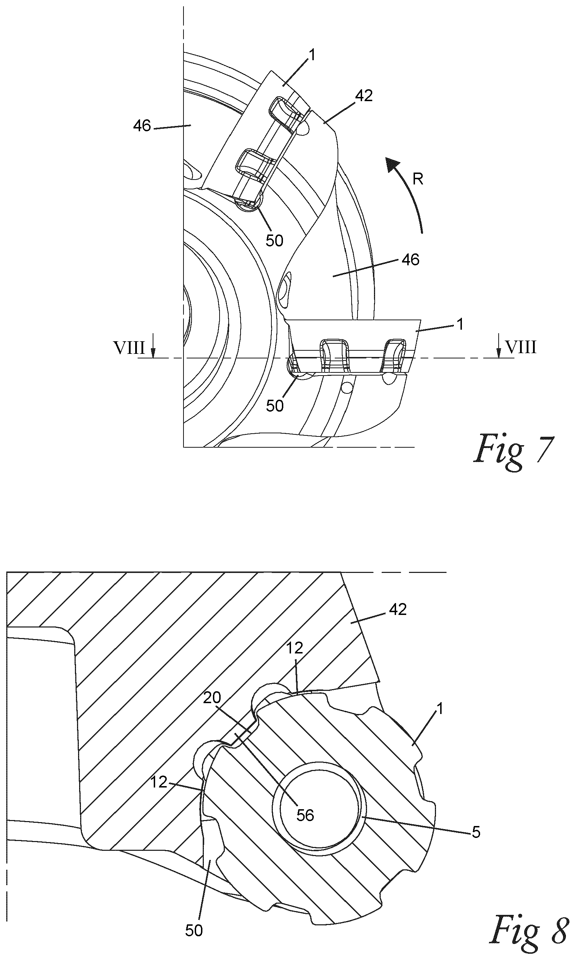

Several anti-rotation pockets 20 are provided in the peripheral surface 10 and distributed about the centre axis C of the cutting insert 1. Each one of the anti-rotation pockets 20 opens into the abutment face 3 at a first end 20a of the anti-rotation pocket and adjoins to said first surface 11 at an opposite second end 20b of the anti-rotation pocket. Each one of the anti-rotation pockets 20 has such a shape that all surface points of the anti-rotation pocket 20 are visible when viewing the abutment face 3 in a plan view along the centre axis C, as illustrated in Figs 1f, wherein all surface points of the anti-rotation pocket 20 have a respective unique projection point in a first imaginary plane PL1 that is perpendicular to the centre axis C and contains the abutment surface 4 on the abutment face 3. The anti-rotation pockets 20 are configured to receive a part of a protrusion 56 (see Figs 4 and 8) on an internal wall 54 of the associated insert seat 50 in a respective one of the different working positions of the cutting insert 1. The protrusion 56 is configured to come into stopping contact with an internal rotation-preventing surface 24a, 24b in one of the anti-rotation pockets 20 when the cutting insert 1 is subjected to a rotation in the insert seat 50 in any direction about its centre axis C. Thus, by its engagement in one of the anti-rotation pockets 20, the protrusion 56 in the insert seat 50 will prevent the cutting insert 1 from rotating in the insert seat 50 out of its prevailing working position.

The anti-rotation pockets 20 included in the peripheral surface 10 of the cutting insert 1 are preferably 4-8 in number, and are preferably equally distributed about the centre axis C of the cutting insert 1, i.e. spaced at equal angular intervals around the circumference of the peripheral surface 10 of the cutting insert 1. In the illustrated embodiments, the cutting insert 1 is provided with six anti-rotation pockets 20 equally distributed about the centre axis C of the cutting insert 1.

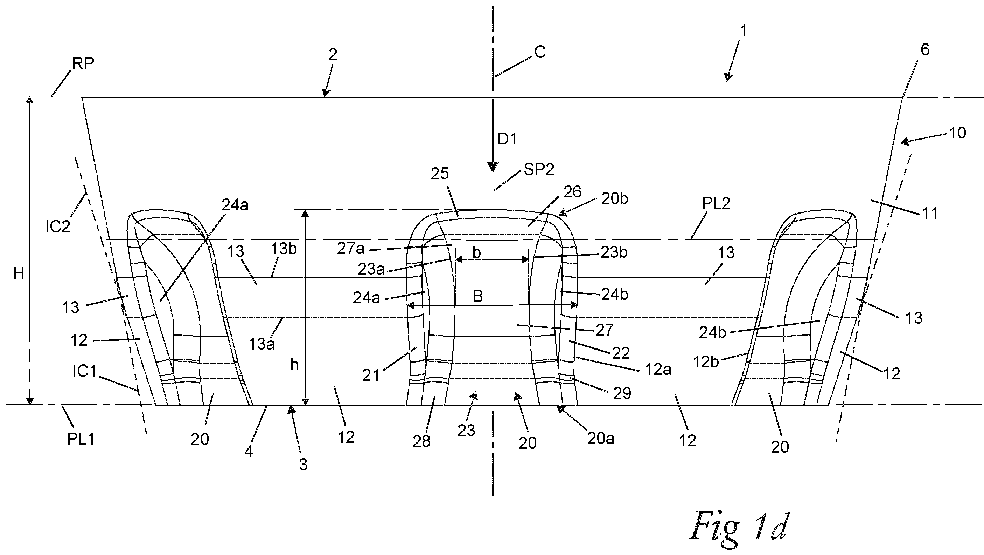

Each one of the anti-rotation pockets 20 preferably extends to a height h (see Fig 1d) of at least 0.5H as measured from the above-mentioned first imaginary plane PL1, where H is the distance from the first imaginary plane PL1 to a reference plane RP that is perpendicular to the centre axis C of the cutting insert 1 and contains the points on the rake face 2 located at the longest distance from the first imaginary plane PL1.

In the illustrated embodiments, the cutting insert 1 further comprises several second surfaces 12, 12' included in the peripheral surface 10 and several connecting surfaces 13 included in the peripheral surface 10, wherein each one of the second surfaces 12, 12' is located between the conically shaped first surface 11 and the abutment face 3 and is connected to the conically shaped first surface 11 via a dedicated one of the connecting surfaces 13. The connecting surfaces 13 are consequently associated to a respective one of the second surfaces 12, 12', and each individual connecting surface 13 forms a transition from the conically shaped first surface 11 to the individual second surface 12, 12' associated with the connecting surface 13 in question.

The second surfaces 12, 12' are distributed about the centre axis C of the cutting insert 1 and separated from each other by the anti-rotation pockets 20, wherein each one of the second surfaces 12, 12' adjoins to one of the anti-rotation pockets 20 along a first lateral edge 12a of the second surface 12, 12' and to another adjacent anti-rotation pocket 20 along an opposite second lateral edge 12b of the second surface 12, 12'. Thus, a second surface 12, 12' is located between every two consecutive anti-rotation pockets 20.

Also the connecting surfaces 13 are distributed about the centre axis C of the cutting insert 1 and separated from each other by the anti-rotation pockets 20. Thus, a connecting surface 13 is located between every two consecutive anti-rotation pockets 20.

Each one of the second surfaces 12, 12' is in its entirety located inside the above-mentioned first imaginary cone IC1 and is spaced from the lateral surface thereof. Each one of the connecting surfaces 13 has an upper edge 13b, through which it adjoins to the conically shaped first surface 11 and which lies on the lateral surface of said first imaginary cone IC1, and a lower edge 13a, through which it adjoins to the associated second surface 12, 12', wherein the lower edge 13a of the connecting surface 13 and all surface points on the connecting surface 13 between the lower and upper edges 13a, 13b thereof are located inside said first imaginary cone IC1 and are spaced from the lateral surface of the first imaginary cone IC1.

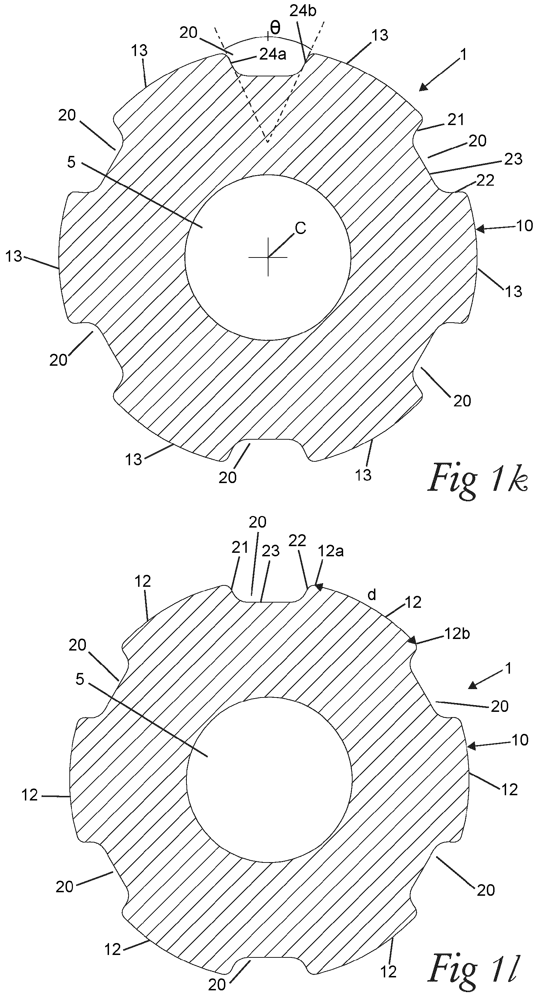

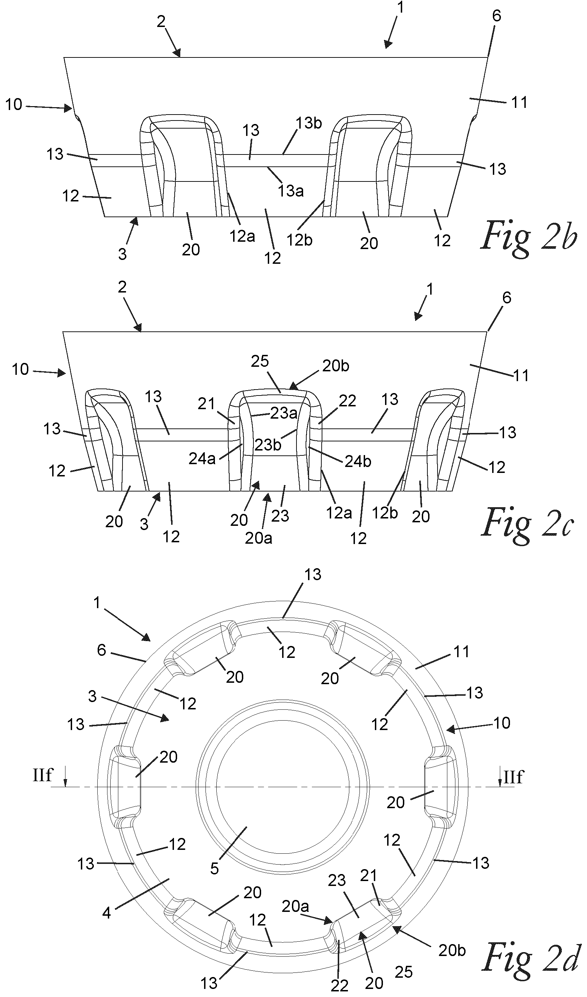

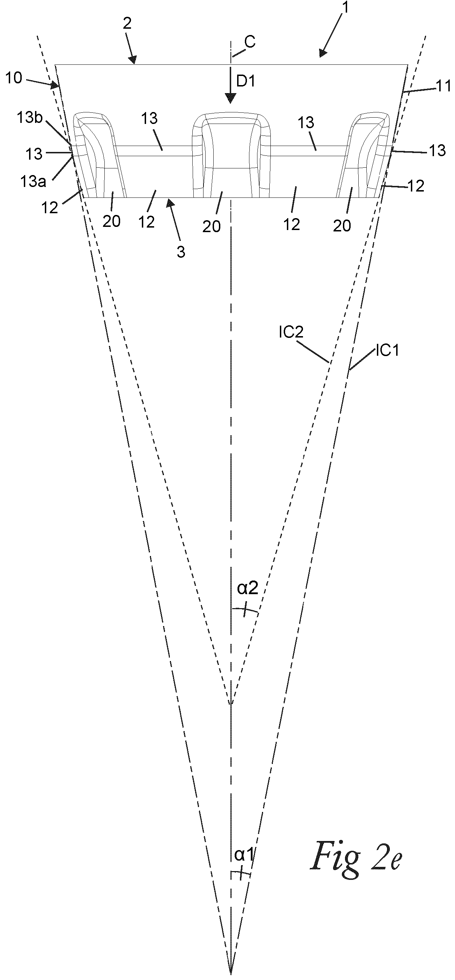

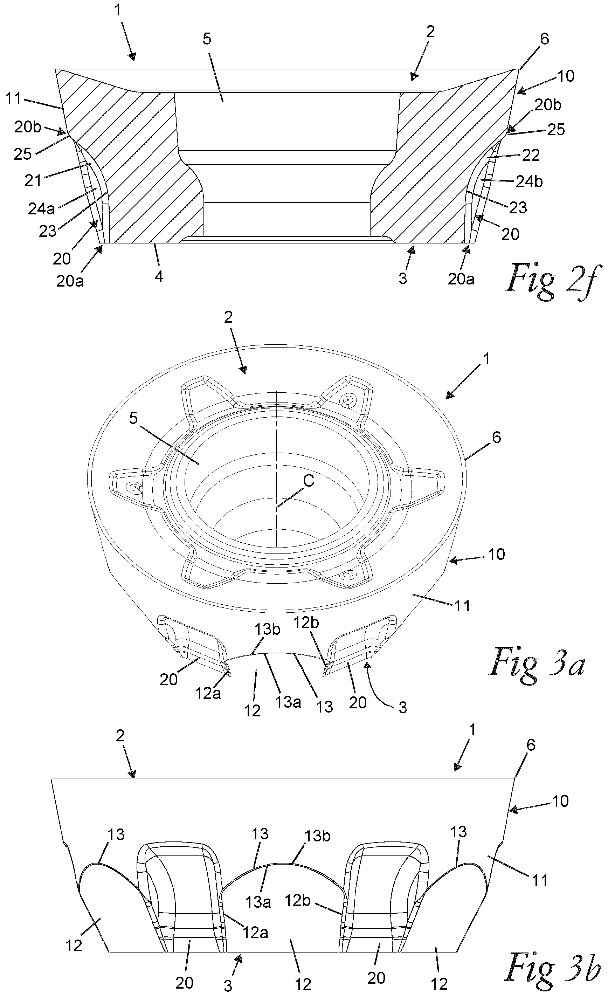

In the embodiments illustrated in Figs 1a-1m and Figs 2a-2f, each one of the second surfaces 12 is conically shaped, wherein the second surfaces 12 together lie on the lateral surface of a second imaginary cone IC2 (see Figs 1e and 2e) that is concentric with the centre axis C of the cutting insert 1 and points in the above-mentioned reference direction D1. In these embodiments, the conically shaped first surface 11 is in its entirety located inside the second imaginary cone IC2 and is spaced from the lateral surface thereof. Furthermore, each one of the connecting surfaces 13 has its lower edge 13a lying on the lateral surface of the second imaginary cone IC2, wherein the upper edge 13b of each connecting surface 13 and all surface points on each connecting surface 13 between the lower and upper edges 13a, 13b thereof are located inside the second imaginary cone IC2 and are spaced from the lateral surface thereof. In these embodiments, the upper and lower edges 13a, 13b of each connecting surface 13 are parallel with each other and extend in a respective plane that is perpendicular to the centre axis C of the cutting insert 1, wherein each one of the connecting surfaces 13 is convex as seen in any plane that contains the centre axis C and intersects the connecting surface 13 (see Fig 1k).

The conically shaped first surface 11 and the conically shaped second surfaces 12 are preferably configured such that the following condition is fulfilled:
0°<(α2-α1)≤20°, preferably 2°≤(α2-α1)≤15°, more preferably 2°≤(α2-α1)≤10°, where:
- α1 is the half-apex angle of the above-mentioned first imaginary cone IC1, and
- α2 is the half-apex angle of the above-mentioned second imaginary cone IC2.

In the embodiment illustrated in Figs 1a-1m, the half-apex angle α1 of the first imaginary cone IC1 is 11° and the half-apex angle α2 of the second imaginary cone IC2 is 18°, which implies that the difference α2-α1 is 7°. In the embodiment illustrated in Figs 2a-2f, the half-apex angle α1 of the first imaginary cone IC1 is 11° and the half-apex angle α2 of the second imaginary cone IC2 is 16°, which implies that the difference α2-α1 is 5°.

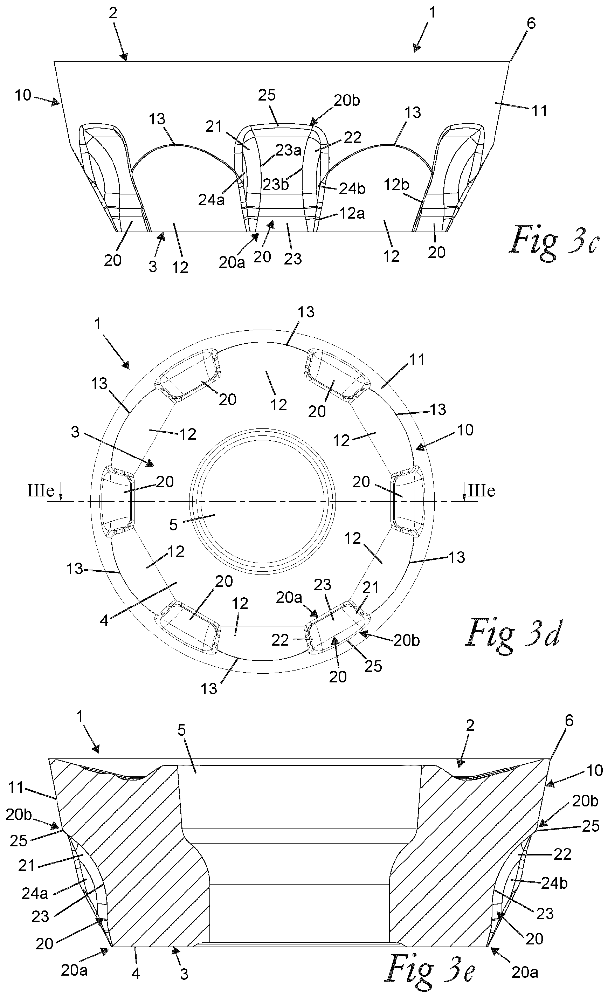

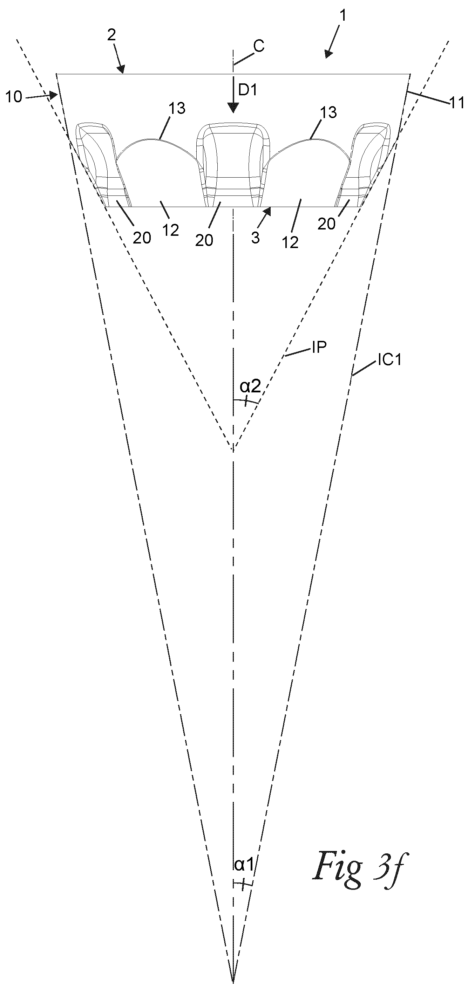

In the embodiment illustrated in Figs 3a-3f, each one of the second surfaces 12' is planar, wherein the second surfaces 12' lie on a respective lateral face of an imaginary pyramid IP (see Fig 3f) that is centred on the centre axis C of the cutting insert 1 and points in the above-mentioned reference direction D1. In this embodiment, the conically shaped first surface 11 is in its entirety located inside the imaginary pyramid IP and is spaced from the lateral faces thereof. Furthermore, each one of the connecting surfaces 13 has its lower edge 13a lying on a lateral face of the imaginary pyramid IP, wherein the upper edge 13b of each connecting surface 13 and all surface points on each connecting surface 13 between the lower and upper edges 13a, 13b thereof are located inside the imaginary pyramid IP and are spaced from the lateral faces thereof. In this embodiment, the upper and lower edges 13a, 13b of each connecting surface 13 extend alongside of each other in an arc between the anti-rotation pockets 20 on either side of the connecting surface 13.

The conically shaped first surface 11 and the planar second surfaces 12' are preferably configured such that the following condition is fulfilled:
0°<(α2-α1)≤20°, preferably 2°≤(α2-α1)≤15°, more preferably 2°≤(α2-α1)≤10°, where:
- α1 is the half-apex angle of the above-mentioned first imaginary cone IC1, and
- α2 is the acute angle of inclination of each individual second surface 12' in relation to the centre axis C of the cutting insert 1. In the embodiment illustrated in Figs 3a-3f, the half-apex angle α1 of the first imaginary cone IC1 is 11° and said angle of inclination α2 of each individual second surface 12' is 28°, which implies that the difference α2-α1 is 17°.

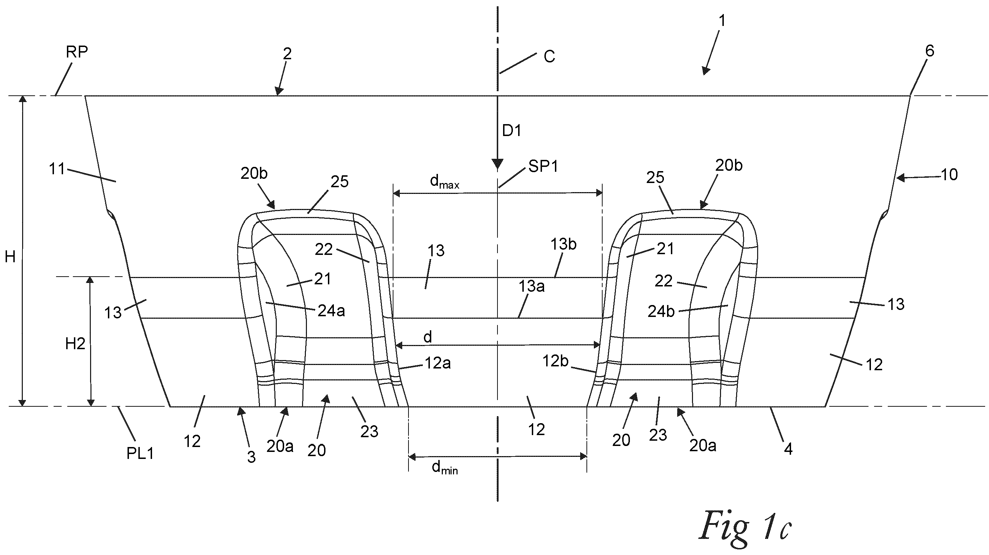

Each one of the second surfaces 12, 12' has such a shape that the distance d (see Figs 1c and 1l) as measured along the second surface 12, 12' between the first and second lateral edges 12a, 12b thereof in a cross-sectional plane that is perpendicular to the centre axis C of the cutting insert 1 and intersects said first and second lateral edges 12a, 12b is continuously reduced when moving along the second surface 12, 12' in the above-mentioned reference direction D1, i.e. in a direction towards the abutment face 3. Thus, the width d of each one of the second surfaces 12, 12', as measured along the individual second surface 12, 12' between the first and second lateral edges 12a, 12b thereof, has a maximum value dₘₐₓ (see Fig 1c) at an upper end of the first and second lateral edges 12a, 12b and a minimum value dₘᵢₙ at a lower end of the first and second lateral edges, wherein this width d is continuously reduced when moving downwards along the first and second lateral edges 12a, 12b from the upper end thereof to the lower end thereof.

In the illustrated embodiments, each one of the second surfaces 12, 12' has mirror symmetry with respect to a symmetry plane SP1 (see Fig 1c) that contains the centre axis C of the cutting insert 1 and intersects the second surface 12, 12' halfway between its first lateral edge 12a and its second lateral edge 12b. Furthermore, in the illustrated embodiments, each one of the anti-rotation pockets 20 has mirror symmetry with respect to a symmetry plane SP2 (see Fig 1d) that contains the centre axis C of the cutting insert 1 and extends across the anti-rotation pocket 20 halfway between the two second surfaces 12, 12' that are separated from each other by the anti-rotation pocket 20.

The second surfaces 12, 12' and the connecting surfaces 13 are preferably configured such that the following condition is fulfilled: 0.20≤H2/H≤0.65, preferably 0.30≤H2/H≤0.55, where:
- H is the distance from the above-mentioned first imaginary plane PL1 to the above-mentioned reference plane RP, and
- H2 (see Fig 1c) is the maximum distance from the first imaginary plane PL1 to the upper edge 13b of any one of the connecting surfaces 13.

The cutting insert 1 preferably has 360°/n rotational symmetry about the centre axis C of the cutting insert, wherein n is an integer corresponding to the number of anti-rotation pockets 20 included in the peripheral surface 10 of the cutting insert 1. In the illustrated embodiments with six anti-rotation pockets 20, the cutting insert 1 has 60° rotational symmetry about the centre axis C. This rotational symmetry of the cutting insert 1 about the centre axis C implies that the anti-rotation pockets 20 are identical to each other, within manufacturing tolerances, that the second surfaces 12, 12' are identical to each other, within manufacturing tolerances, and that the connecting surfaces 13 are identical to each other, within manufacturing tolerances.

Each one of the anti-rotation pockets 20 has a U-shaped cross-section as seen in planes perpendicular to the centre axis C of the cutting insert 1, as illustrated in Figs 1j-1m, wherein each one of the anti-rotation pockets 20 has:
- a first lateral wall 21 that extends from the first end 20a of the anti-rotation pocket 20 towards the second end 20b thereof,
- a second lateral wall 22 that extends from the first end 20a of the anti-rotation pocket 20 towards the second end 20b thereof, wherein the first and second lateral walls 21, 22 are located opposite each other and face each other, and
- a central wall 23 that extends from the first end 20a of the anti-rotation pocket 20 towards the second end 20b thereof, wherein the central wall 23 has a first longitudinal edge 23a, through which it adjoins to the first lateral wall 21, and an opposite second longitudinal edge 23b, through which it adjoins to the second lateral wall 22.

A first rotation-preventing surface 24a is provided on the first lateral wall 21 and a second rotation-preventing surface 24b is provided on the second lateral wall 22 opposite to said first rotation-preventing surface 24a. The first and second rotation-preventing surfaces 24a, 24b are preferably planar, or at least substantially planar. In the latter case, the first and second rotation-preventing surfaces 24a, 24b of the same anti-rotation pocket 20 are with advantage configured to form an angle θ (see Fig 1k) of 35-65°, preferably 40-60°, with each other as seen in any plane that is perpendicular to the centre axis C of the cutting insert 1 and intersects the first and second rotation-preventing surfaces 24a, 24b, wherein the first and second rotation-preventing surfaces 24a, 24b of the same anti-rotation pocket 20 diverge as seen in a direction from the centre axis C of the cutting insert 1 and radially outwards.

The central wall 23 of each anti-rotation pocket 20 extends in a straight line, or at least substantially straight line, between its first and second longitudinal edges 23a, 23b as seen in any plane that is perpendicular to the centre axis C of the cutting insert 1 and intersects the first and second longitudinal edges 23a, 23b of the central wall 23.

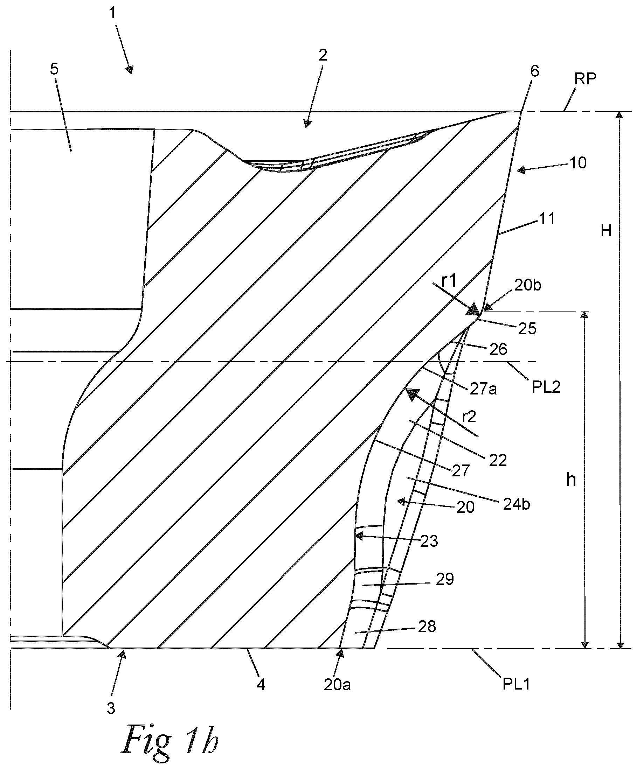

Each one of the anti-rotation pockets 20 has an upper transition surface 25 at its second end 20b, wherein the central wall 23 of the anti-rotation pocket 20 adjoins to the conically shaped first surface 11 through the upper transition surface 25 of the anti-rotation pocket 20. The upper transition surface 25 of each anti-rotation pocket 20 is convex as seen in the above-mentioned symmetry plane SP2 and in any other plane that contains the centre axis C of the cutting insert 1 and intersects the upper transition surface 25, and has a radius of curvature r1 (see Fig 1h).

The central wall 23 of each anti-rotation pocket 20 is divided at an imaginary dividing plane PL2 into an upper portion 26 located between the imaginary dividing plane PL2 and the upper transition surface 25 of the anti-rotation pocket 20 and an adjacent lower portion 27 located between the imaginary dividing plane PL2 and the abutment face 3, wherein the imaginary dividing plane PL2 is perpendicular to the centre axis C of the cutting insert 1 and located at a distance of 0.85h from the above-mentioned first imaginary plane PL1, where h is the distance from the first imaginary plane PL1 to the point on the upper transition surface 25 located at the longest distance from the first imaginary plane PL1. Thus, h corresponds to the height h of the anti-rotation pocket 20 as measured from the first imaginary plane PL1.

The above-mentioned lower portion 27 of the central wall 23 has an upper surface 27a, through which the lower portion 27 adjoins to the adjacent upper portion 26 of the central wall 23. This upper surface 27a is concave as seen in any plane that contains the centre axis C of the cutting insert 1 and intersects the upper surface 27a, wherein the upper surface 27a has a radius of curvature r2 of at least 1.0 mm, preferably at least 1.5 mm.

The central wall 23 of each anti-rotation pocket 20 is configured such:
- that in each point on the upper portion 26 of the central wall 23, and in each point on the central wall 23 located in the imaginary dividing plane PL2, the central wall 23 has a tangent plane that forms an angle β of at least 25° and no more than 60°, preferably at least 30° and no more than 50°, with the first imaginary plane PL1, and
- that in each point on the lower portion 27 of the central wall 23, the central wall 23 has a tangent plane that forms an angle γ with the first imaginary plane PL1 smaller than 90° and larger than or equal to the angle β formed between the first imaginary plane PL1 and the tangent plane of the points on the central wall 23 located in the imaginary dividing plane PL2.

The above-mentioned radius of curvature r1 of the upper transition surface 25 of each anti-rotation pocket 20 is preferably smaller than the radius of curvature r2 of said concave upper surface 27a of the central wall 23 of the anti-rotation pocket. Furthermore, the radius of curvature r1 of the upper transition surface 25 of each anti-rotation pocket 20 is preferably smaller than 1.0 mm, and more preferably smaller than 0.5 mm.

Each one of the anti-rotation pockets 20 is with advantage configured such that, in each plane that is perpendicular to the centre axis C of the cutting insert 1 and intersects the lower portion 27 of the central wall 23 of the anti-rotation pocket 20, the following condition is fulfilled: 0.25≤b/B<1.00, preferably 0.25≤b/B≤0.90, more preferably 0.30≤b/B≤0.60, where:
- b (see Fig 1d) is the distance between the first and second longitudinal edges 23a, 23b of the central wall 23, as seen in the plane in question, and
- B is the width of the anti-rotation pocket 20, as seen in the plane in question.

In the embodiment illustrated in Figs 1a-1m, each one of the anti-rotation pockets 20 has an expanded end section 28 at its first end 20a where the central wall 23 of the anti-rotation pocket 20 has an increased inclination radially inwards towards the centre axis C of the cutting insert 1 and where the first and second lateral walls 21, 22 of the anti-rotation pocket 20 have a lateral inclination away from each other, wherein a waste-like section 29 is formed in the anti-rotation pocket 20 directly above the expanded end section 28. The expanded end section 28 facilitates the release of an anti-rotation pocket 20 from the protrusion 56 in an insert seat 50 when the cutting insert 1 is to be rotated by a machine operator into a new working position in the insert seat 50. The end section 28 preferably has such an expanded shape that it allows the anti-rotation pocket 20 to go free from said protrusion 56 in the insert seat 50 when the fastening element 8 of the cutting insert has been untightened but still remains engaged in the associated screw hole in the bottom wall 52 of the insert seat, which makes it easier for the machine operator to reposition the cutting insert 1 in the associated insert seat 50 when the working position of the cutting insert in the insert seat is to be changed.

Figs 4-8 illustrate a cutting tool 40 in the form of a face milling cutter. However, the cutting tool of the present invention may as an alternative have the design of any other suitable type of milling tool. The cutting tool of the present invention may also have the design of a turning tool.

The cutting tool 40 comprises a tool body 42 and is, when designed as a milling tool, configured to be rotated about an axis of rotation 43. The tool body 42 has a front end 42a and an opposite rear end 42b. A longitudinal centre axis 44 of the tool body 42 extends between the rear end 42b and the front end 42a of the tool body, wherein this centre axis 44 coincides with the axis of rotation 43 of the cutting tool 40. A rear part of the tool body 42 forms a connection member 45, through which the tool body 42 is mountable, directly or via an intermediate tool holder, to a rotating spindle or the similar of a machine, for instance a milling machine. At the front end 42a, the tool body 42 is provided with an axially forwardly facing front face 42c. The tool body 42 also has a peripheral surface 42d that adjoins to the front face 42c and extends from the front face 42c towards the rear end 42b of the tool body.

In the illustrated embodiment, the tool body 42 is provided with several insert seats 50 which are distributed in the circumferential direction of the tool body 42 and configured to receive a respective cutting insert 1. Thus, the insert seats 50, and also the cutting inserts 1, are distributed about the centre axis 44 of the tool body 42. In the illustrated embodiment, the cutting tool 40 is provided with indexable cutting inserts 1 of the type illustrated in Figs 1a-1m. Each cutting insert 1 is configured to be detachably mounted in its associated insert seat 50. A chip pocket 46 is provided in the tool body 42 in front of each insert seat 50 as seen in the intended direction of rotation R of the tool body 42.

The cutting inserts 1 are made of hard and wear-resistant material, preferably cemented carbide, and the tool body 42 is preferably made of steel.

In the illustrated embodiment, the tool body 42 is provided with six insert seats 50 spaced apart in the circumferential direction of the tool body. However, the tool body 42 may as an alternative, inter alia depending on the diameter of the tool body, be provided with any other suitable number of insert seats 50. In the illustrated embodiment, each insert seat 50 is located at a transition between the front face 42c and the peripheral surface 42d of the tool body 42. Each insert seat 50 comprises a space 51 configured to accommodate a releasably mounted cutting insert 1, wherein this space 51 is open towards the front face 42c of the tool body 42 in order to allow a cutting insert 1 mounted in the insert seat 50 to project in the axial direction of the tool body 42 beyond the front end 42a thereof and also open towards the peripheral surface 42d of the tool body 42 in order to allow a cutting insert 1 mounted in the insert seat 50 to project in the radial direction of the tool body 42 beyond the peripheral surface 42d thereof.

Each insert seat 50 comprises a substantially tangentially facing bottom wall 52, a substantially tangentially facing top opening opposite to the bottom wall 52 and an internal wall 54 provided between the bottom wall 52 and the top opening. The top opening is facing the chip pocket 46 provided in front of the insert seat 50. The bottom wall 52 is provided with a planar tangential support surface 53 configured to abut against the abutment surface 4 on the abutment face 3 of a cutting insert 1 when the cutting insert is mounted in the insert seat 50. The internal wall 54 extends transversely to the bottom wall 52 and delimits the cutting insert accommodating space 51 together with the bottom wall 52. The internal wall 54 is provided with two curved side support surfaces 55a, 55b configured to abut against the conically shaped first surface 11 on the peripheral surface 10 of the cutting insert 1. A substantially axially facing first side support surface 55a is located at a first end of the internal wall 54 close to the peripheral surface 42d of the tool body 42, and a substantially radially facing second side support surface 55b is located at a second end of the internal wall 54 close to the front face 42c of the tool body 42. The first and second side support surfaces 55a, 55b are curved to conform to the curved shape of the conically shaped first surface 11 of the cutting inserts 1.

Each insert seat 50 is provided with an anti-rotation stop, which is provided as a protrusion 56 on the internal wall 54 of the insert seat and which protrudes from the internal wall 54 into the cutting insert accommodating space 51. In the illustrated embodiment, the protrusion 56 is located between the first and second side support surfaces 55a, 55b of the insert seat 50, as seen in a direction in the cutting insert accommodating space 51 in the insert seat corresponding to a circumferential direction of the peripheral surface 10 of a cutting insert 1 when mounted in the insert seat 50 in any of its working positions. The anti-rotation pockets 20 of a cutting insert 1 are configured to receive the protrusion 56 of the associated insert seat 50 with a small play in a respective one of the different working positions of the cutting insert 1 when the cutting insert is mounted in the insert seat 50, as illustrated in Fig 8. By its engagement in one of the anti-rotation pockets 20 in the peripheral surface 10 of the cutting insert 1, the protrusion 56 will prevent the cutting insert 1 from rotating in the insert seat 50 out of its prevailing working position. Thus, the anti-rotation pockets 20 of each cutting insert 1 and the protrusion 56 of the associated insert seat 50 jointly define the different working positions of the cutting insert 1 in the associated insert seat 50 and jointly prevent the cutting insert 1 from rotating in the associated insert seat 50 out of its prevailing working position.

The through hole 5 in the cutting insert 1 is configured to receive a fastening element 8 in the form of a screw, by means of which the cutting insert 1 may be releasably fixed in the associated insert seat 50 of the tool body 42 in any of its working positions. The fastening element 8 is configured to extend through the through hole 5 in the cutting insert 1 and to be in threaded engagement with a screw hole 57 provided in the bottom wall 52 of the insert seat 50.

When mounted in one of the insert seats 50 in any of its working positions, the cutting insert 1 is configured to:
- abut against the side support surfaces 55a, 55b on the internal wall 54 of the insert seat 50 through the conically shaped first surface 11 on the peripheral surface 10 of the cutting insert,
- abut against the tangential support surface 53 on the bottom wall 52 of the insert seat 50 through the abutment surface 4 on the abutment face 3 of the cutting insert, and
- be positioned with a part of the protrusion 56 on the internal wall 54 of the insert seat 50 received in one of the anti-rotation pockets 20 in the peripheral surface 10 of the cutting insert 1.

In the illustrated embodiment, each insert seat 50 is so designed that a cutting insert 1 is given a positive axial tipping-in angle and a negative radial tipping-in angle when mounted in the insert seat 50 in any of its working positions.

The insert seats 50 may, as illustrated in Figs 4-8, be formed directly in the tool body 42. However, each insert seat may as an alternative be formed in a separate cassette, which in its turn is releasably mounted to the tool body.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. An indexable cutting insert, which is turnable into different working positions and comprises:
- a rake face (2) and an abutment face (3) arranged on opposite sides of the cutting insert (1), the cutting insert (1) having a centre axis (C) that extends between the rake face (2) and the abutment face (3), wherein the abutment face (3) comprises an abutment surface (4) that is configured to serve as a tangential abutment surface of the cutting insert (1) in said working positions of the cutting insert and abut against a corresponding tangential support surface (53) in an insert seat (50) in a tool body (42) of a cutting tool when the cutting insert (1) is mounted in the insert seat in any of its working positions;
- a peripheral surface (10) extending around the cutting insert (1) between the rake face (2) and the abutment face (3);
- a cutting edge (6) formed at an intersection between the peripheral surface (10) and the rake face (2) and extending around the centre axis (C) along a periphery of the rake face (2);
- a conically shaped first surface (11) included in the peripheral surface (10) and fully encircling a portion of the centre axis (C), wherein this first surface (11) is concentric with the centre axis (C) and lies on the lateral surface of a first imaginary cone (IC1) that points in a reference direction (D1) defined as a direction from the rake face (2) towards the abutment face (3) along the centre axis (C), and wherein the cutting insert (1), when mounted in said insert seat (50) in any of its working positions, is configured to abut against one or more side support surfaces (55a, 55b) in the insert seat (50) through this first surface (11); and
- several anti-rotation pockets (20) provided in the peripheral surface (10) and distributed about the centre axis (C), wherein each one of the anti-rotation pockets (20) opens into the abutment face (3) at a first end (20a) of the anti-rotation pocket and adjoins to said first surface (11) at an opposite second end (20b) of the anti-rotation pocket, wherein each one of the anti-rotation pockets (20) has a U-shaped cross-section in planes perpendicular to the centre axis (C), and wherein each one of the anti-rotation pockets (20) has such a shape that all surface points of the anti-rotation pocket (20) are visible when viewing the abutment face (3) in a plan view along the centre axis (C) and have a respective unique projection point in a first imaginary plane (PL1) that is perpendicular to the centre axis (C) and contains said abutment surface (4),
wherein each one of the anti-rotation pockets (20) has:
• a first lateral wall (21) extending from the first end (20a) of the anti-rotation pocket (20) towards the second end (20b) thereof, wherein a first rotation-preventing surface (24a) is provided on the first lateral wall (21),
• a second lateral wall (22) extending from the first end (20a) of the anti-rotation pocket (20) towards the second end (20b) thereof, wherein the first and second lateral walls (21, 22) are located opposite each other and face each other, and wherein a second rotation-preventing surface (24b) is provided on the second lateral wall (22) opposite to said first rotation-preventing surface (24a),
• a central wall (23) extending from the first end (20a) of the anti-rotation pocket (20) towards the second end (20b) thereof, wherein the central wall (23) has a first longitudinal edge (23a), through which it adjoins to the first lateral wall (21), and an opposite second longitudinal edge (23b), through which it adjoins to the second lateral wall (22), and
• an upper transition surface (25) at the second end (20b) of the anti-rotation pocket (20), wherein the central wall (23) adjoins to said first surface (11) through the upper transition surface (25), and wherein the upper transition surface (25) is convex in any plane that contains the centre axis (C) and intersects the upper transition surface (25) and has a radius of curvature (r1),
**characterized in:**
- **that** the central wall (23) of each anti-rotation pocket (20) extends in a straight line, or at least substantially straight line, between its first and second longitudinal edges (23a, 23b) as seen in any plane that is perpendicular to the centre axis (C) and intersects the first and second longitudinal edges (23a, 23b) of the central wall (23);
- **that** the central wall (23) of each anti-rotation pocket (20) is divided at an imaginary dividing plane (PL2) into an upper portion (26) located between the imaginary dividing plane (PL2) and the upper transition surface (25) of the anti-rotation pocket (20) and an adjacent lower portion (27) located between the imaginary dividing plane (PL2) and the abutment face (3), wherein the imaginary dividing plane (PL2) is perpendicular to the centre axis (C) and located at a distance of 0.85h from the first imaginary plane (PL1), where h is the distance from the first imaginary plane (PL1) to the point on the upper transition surface (25) located at the longest distance from the first imaginary plane (PL1), wherein the lower portion (27) of the central wall (23) has an upper surface (27a), through which it adjoins to said upper portion (26) of the central wall (23) and which is concave as seen in any plane that contains the centre axis (C) and intersects the upper surface (27a), this upper surface (27a) having a radius of curvature (r2) of at least 1.0 mm, preferably at least 1.5 mm; and
- **that** the central wall (23) of each anti-rotation pocket (20) is configured such:
• **that** in each point on the upper portion (26) of the central wall (23), and in each point on the central wall (23) located in said imaginary dividing plane (PL2), the central wall (23) has a tangent plane that forms an angle (β) of at least 25° and no more than 60°, preferably at least 30° and no more than 50°, with the first imaginary plane (PL1), and
• **that** in each point on the lower portion (27) of the central wall (23), the central wall has a tangent plane that forms an angle (γ) with the first imaginary plane (PL1) smaller than 90° and larger than or equal to the angle (β) formed between the first imaginary plane (PL1) and the tangent plane of the points on the central wall (23) located in said imaginary dividing plane (PL2).

2. An indexable cutting insert according to claim 1, **characterized in that** said radius of curvature (r1) of the upper transition surface (25) is smaller than the radius of curvature (r2) of said concave upper surface (27a), preferably smaller than 1.0 mm, and more preferably smaller than 0.5 mm.

3. An indexable cutting insert according to claim 1 or 2, **characterized in that** each one of the anti-rotation pockets (20) is configured such that, in each plane that is perpendicular to the centre axis (C) and intersects the lower portion (27) of the central wall (23) of the anti-rotation pocket (20), the following condition is fulfilled: 0.25≤b/B<1.00, preferably 0.25≤b/B≤0.90, more preferably 0.30≤b/B≤0.60, where:
• b is the distance between the first and second longitudinal edges (23a, 23b) of the central wall (23), as seen in the plane in question, and
• B is the width of the anti-rotation pocket (20), as seen in the plane in question.

4. An indexable cutting insert according to any of claims 1-3, **characterized in that** each one of the anti-rotation pockets (20) extends to a height of at least 0.5H as measured from the first imaginary plane (PL1), where H is the distance from the first imaginary plane (PL1) to a reference plane (RP) that is perpendicular to the centre axis (C) and contains the points on the rake face (2) located at the longest distance from the first imaginary plane (PL1).

5. An indexable cutting insert according to any of claims 1-4, **characterized in that** said first and second rotation-preventing surfaces (24a, 24b) are planar, or at least substantially planar.

6. An indexable cutting insert according to claim 5, **characterized in that** the first and second rotation-preventing surfaces (24a, 24b) of the same anti-rotation pocket (20) form an angle (θ) of 35-65°, preferably 40-60°, with each other as seen in any plane that is perpendicular to the centre axis (C) and intersects the first and second rotation-preventing surfaces (24a, 24b), wherein the first and second rotation-preventing surfaces (24a, 24b) of the same anti-rotation pocket (20) diverge as seen in a direction from the centre axis (C) and radially outwards.

7. An indexable cutting insert according to any of claims 1-6, **characterized in that** the anti-rotation pockets (20) are equally distributed about the centre axis (C).

8. An indexable cutting insert according to claim 7, **characterized in that** the cutting insert (1) has 360°/n rotational symmetry about the centre axis (C), wherein n is an integer corresponding to the number of said anti-rotation pockets (20).

9. An indexable cutting insert according to any of claims 1-8, **characterized in that** each one of the anti-rotation pockets (20) has mirror symmetry with respect to a symmetry plane (SP2) that contains the centre axis (C) and extends across the anti-rotation pocket (20) halfway between the first and second lateral walls (21, 22) of the anti-rotation pocket (20).

10. An indexable cutting insert according to any of claims 1-9, **characterized in that** the cutting edge (6) is circular and formed at an intersection between the rake face (2) and the peripheral surface (10), preferably between the rake face (2) and said first surface (11).

11. An indexable cutting insert according to any of claims 1-10, **characterized in:**
- **that** the indexable cutting insert (1) comprises several second surfaces (12) included in the peripheral surface (10) and several connecting surfaces (13) included in the peripheral surface (10), wherein each one of the second surfaces (12) is located between said first surface (11) and the abutment face (3) and connected to the first surface (11) via a dedicated one of the connecting surfaces (13), wherein the second surfaces (12) are distributed about the centre axis (C) and separated from each other by the anti-rotation pockets (20) such that each one of the second surfaces (12) adjoins to one of the anti-rotation pockets (20) along a first lateral edge (12a) of the second surface (12) and to another adjacent anti-rotation pocket (20) along an opposite second lateral edge (12b) of the second surface (12), and wherein each one of the second surfaces (12) is in its entirety located inside said first imaginary cone (IC1) and spaced from the lateral surface thereof;
- **that** each one of the connecting surfaces (13) has an upper edge (13b), through which it adjoins to said first surface (11) and which lies on the lateral surface of said first imaginary cone (IC1), and a lower edge (13a), through which it adjoins to the associated second surface (12), the lower edge (13a) of the connecting surface (13) and all surface points on the connecting surface (13) between the lower and upper edges (13a, 13b) thereof being located inside said first imaginary cone (IC1) and spaced from the lateral surface thereof;
- **that** each one of the second surfaces (12) is conically shaped, wherein the second surfaces (12) together lie on the lateral surface of a second imaginary cone (IC2) that is concentric with the centre axis (C) and points in said reference direction (D1), or each one the second surfaces (12) is planar, wherein the second surfaces (12) lie on a respective lateral face of an imaginary pyramid (IP) that is centred on the centre axis (C) and points in said reference direction (D1);
- **that** said first surface (11) is in its entirety located inside said second imaginary cone (IC2) and spaced from the lateral surface thereof or in its entirety located inside said imaginary pyramid (IP) and spaced from the lateral faces thereof;
- **that** each one of the connecting surfaces (13) has its lower edge (13a) lying on the lateral surface of said second imaginary cone (IC2) or on a lateral face of said imaginary pyramid (IP), the upper edge (13b) of the connecting surface (13) and all surface points on the connecting surface (13) between the lower and upper edges (13a, 13b) thereof being located inside said second imaginary cone (IC2) and spaced from the lateral surface thereof or being located inside said imaginary pyramid (IP) and spaced from the lateral faces thereof; and
- **that** each one of the second surfaces (12) has such a shape that the distance (d) as measured along the second surface (12) between the first and second lateral edges (12a, 12b) thereof in a cross-sectional plane that is perpendicular to the centre axis (C) and intersects said first and second lateral edges (12a, 12b) is continuously reduced when moving along the second surface (12) in said reference direction (D1).

12. An indexable cutting insert according to claim 11, **characterized in that** each one of the second surfaces (12) has mirror symmetry with respect to a symmetry plane (SP1) that contains the centre axis (C) and intersects the second surface (12) halfway between its first lateral edge (12a) and its second lateral edge (12b).

13. An indexable cutting insert according to claim 11 or 12, **characterized in that** said first and second surfaces (12) are configured such that the following condition is fulfilled:
0°<(α2-α1)≤20°, preferably 2°≤(α2-α1)≤15°, more preferably 2°≤(α2-α1)≤10°, where:
- α1 is the half-apex angle of said first imaginary cone (IC1), and
- α2 is the half-apex angle of said second imaginary cone (IC2) when each one of the second surfaces (12) is conically shaped, and
α2 is the acute angle of inclination of each individual second surface (12) in relation to the centre axis (C) when each one of the second surfaces (12) is planar.

14. An indexable cutting insert according to any of claims 11-13, **characterized in that** said second surfaces (12) and said connecting surfaces (13) are configured such that the following condition is fulfilled: 0.20≤H2/H≤0.65, preferably 0.30≤H2/H≤0.55, where:
• H is the distance from the first imaginary plane (PL1) to a reference plane (RP) that is perpendicular to the centre axis (C) and contains the points on the rake face (2) located at the longest distance from the first imaginary plane (PL1), and
• H2 is the maximum distance from the first imaginary plane (PL1) to the upper edge (13b) of any one of the connecting surfaces (13).

15. A cutting tool comprising at least one indexable cutting insert (1) according to any of claims 1-14.
